# NEUE EUROPÄISCHE PATENTSCHRIFT

(11) **EP 0 232 701 B2**
(45) Veröffentlichungstag und Bekanntmachung des Hinweises auf die Entscheidung über den Einspruch: **18.11.1993**
(45) Hinweis auf die Patenterteilung: 22.11.1990
(21) Anmeldenummer: 87100042.8
(22) Anmeldetag: 03.01.1987
(51) Int. Cl.: C08F 10/02, C08F 2/34

(54) **Einsatz von Antistatika zur Vermeidung von Belagbildung bei der Herstellung von ultrahochmolekularem Polyethylen in Gasphasenreaktoren**
Use of anti-statics to prevent the formation of deposits during the manufacture of polyethylene of ultra-high molecular weight in a gas-phase reactor
Utilisation d'antistatiques afin d'éviter l'encrassement des parois pendant la préparation de polyethylène à poids moléculaire ultrahaut dans un réacteur à phase gazeuse

(30) Priorität: 11.01.1986 DE 3600611
(43) Veröffentlichungstag der Anmeldung: 19.08.1987
(73) Patentinhaber: BASF Aktiengesellschaft, 67063 Ludwigshafen (DE)
(72) Erfinder: Müller-Mall, Rudolf, Dr., D-6708 Neuhofen (DE); Kerth, Jürgen, Dr., D-6701 Maxdorf (DE); Schweier, Günther, Dr., D-6701 Friedelsheim (DE)

(56) Entgegenhaltungen:
- EP-A- 0 107 127
- EP-A- 0 110 087
- US-A- 4 220 580
- US-A- 4 532 311
- CHEMICAL ABSTRACTS, Band 94, 1981, Seite 17, Zusammenfassung Nr. 192929v, Columbus, Ohio, US; & JP-A-81 04 608

## Beschreibung

Die Erfindung betrifft ein Verfahren zur Herstellung von Ethylenpolymerisaten mit einem mittleren Molekulargewicht von gleich oder größer als 2.10⁶ durch Homopolymerisation von Ethylen oder Copolymerisation von Ethylen mit Ethylen copolymerisierbaren Verbindungen durch kontinuierliches Einführen der Monomeren in ein Polymerisationssystem, in dem eine Temperatur zwischen 60 und 125°C und ein Druck zwischen 5 und 70 bar herrscht, wobei man die Polymerisation in Anwesenheit eines Katalysators und gegebenenfalls eines Molekulargewichtsreglers in der Gasphase in einem durchmischten Schüttbett aus kleinteiligem Polymerisat mit einem mittleren Teilchendurchmesser von gleich oder kleiner als 1 mm unter Abfuhr der Polymerisationswärme durch Kühlung des Ethylenkreisgases ausführt, und Austragen des Polymerisats aus dem Polymerisationssystem.

Bei derartigen Verfahren können Homo- und Copolymerisate des Ethylens mit Dichten zwischen 0,915 und 0,965g/cm³ erhalten werden, wobei durch den Wegfall von Löse-bzw. Suspensionsmittel oder hohem Druck die Gewinnung der Polymerisate stark vereinfacht ist.

Verfahren zur Herstellung von Ethylenpolymerisaten in der Gasphase in einem durchmischten Schüttbett aus kleinteiligem Polymerisat unter Abfuhr der Polymerisationswärme durch Kühlung des im Kreislauf geführten Ethylens sind aus der Literatur bekannt (vgl. Ullmnns Encyclopädie der technischen Chemie 4, [1980], [19], Seite 186, Verlag Chemie GmbH, D-6940 Weinheim, die US-Patente 4 012 573, 4 427 573, 4 376 191 und 4 467 080 sowie die EP-Patentanmeldungen A1-0 110 087, A2-0 050 013, A1-0 050 477 und A2-0 059 080).

Nach den bekannten Verfahren werden Ziegler-oder Phillipskatalysatoren und Wasserstoff als Molekulargewichtsregler eingesetzt. Der Reaktor kann z.B. aus der Gaseintrittszone, einem zylindrischen Reaktionsteil und einer Beruhigungszone, in der die Polymerisatteilchen von nicht umgesetztem Gas getrennt werden, bestehen. Der Durchmesser eines solchen bekannten Reaktors liegt in der Polymerisationszone bei 4,5m (vgl. "Chemical Engineering" 80, [1973], [27], Seiten 72 bis 73).

Wichtig ist jedoch bei diesem Polyethylenherstellprozeß, der nahe der Sintertemperatur des Polyethylens verläuft, unter konstanten Reaktionsbedingungen und konstanten Mischbedingungen zu arbeiten. Es hat sich trotz der Fülle gradueller Verbesserungen immer wieder als nachteilig erwiesen, daß es zu Produktabscheidungen an den Reaktorwänden und -ein bauten und zur Bildung von Polymerbrocken kommt. Damit können keine konstanten Reaktionsbedingungen mehr eingehalten werden.

Schwankende Produktqualität und kurze Reaktorlaufzeiten mit anschließend aufwendiger Reaktorreinigung sind die Folge.

Aus der Literatur ist es bereits bekannt, zur Vermeidung von Belagbildung bei der Polymerisation von Olefinen in der flüssigen Phase bzw. bei flüssigkeitsähnlichen Dichten und Lösungseigenschaften überkritischen Ethylens sowie bei der Suspensionspolymerisation des Ethylens dem Polymerisationssystem ein Antistatikum zuzusetzen (vgl. EP-A1-107 127, US-Patent 4 220 580 sowie Chemical Abstracts 83, [1975], 116 444 und 94, [1981], 16340). Bei diesen bekannten Verfahren können Ladungen, die sich auf den suspendierten Polymer- oder Katalysatorkörnern gebildet haben, zur Wand abfließen bzw. es können bei der Hochdruckpolymerisation die Reaktion kontrolliert und die Eigenschaften des Hochdruckpolyethylens verbessert werden.

Aufgabe der vorliegenden Erfindung war es, die Ausbildung von Polymerbrocken, Reaktorbelägen und die Belagbildung an den Einbauten bei der Gasphasenpolymerisation des Ethylens zu verhindern. Eine zweite Aufgabe bestand darin, eine einwandfreie Durchströmung des durchmischten Schüttbettes aus besonders kleinteiligem Polymerisat mit Reaktions- und Kreisgas zu gewährleisten. Eine dritte Aufgabe bestand darin, die Produktqualität des ultrahochmolekularen Ethylenpolymerisats zu verbessern.

Diese Aufgaben wurden durch ein Verfahren gemäß Patentansprüche 1 bis 6 gelöst.

Unter ultrahochmolekularen Ethylenpolymerisaten werden Polyethylen sowie die mit Ethylen unter den angegebenen Bedingungen herstellbaren Copolymerisate des Ethylens mit α-Monoolefinen verstanden, deren Molekulargewicht 2.10⁶ überschreitet. Bevorzugt weisen die Ethylenpolymerisate ein Molekulargewicht von 3 × 10⁶ bis 6 × 10⁶ auf. Unter Molekulargewicht wird dabei das Viskositätsmittel verstanden, bestimmt nach Mark-Houwink. Ultrahochmolekulare Ethylenpolymerisate sind an sich bekannt.

Als Comonomere zum Ethylen kommen insbesondere n-Buten-1, n-Hexen-1, 4-Methylpenten-1 oder Propen in Betracht. Die erhaltenen Ethylenpolymerisate weisen Dichten zwischen 0,91 und 0,940 g/cm³, gemessen nach DIN 53479, auf. Die Ethylenpolymerisate fallen in kleinteiliger Form als feiner oder grober Grieß an, wobei der Teilchendurchmesser im allgemeinen im Bereich von etwa 0,03 bis 1, insbesondere etwa 0,1 bis 1 mm liegt.

Bei der Polymerisation werden die Monomeren gemäß den eingangs zitierten Literaturstellen in ein Polymerisationssystem, in dem eine Temperatur von 60 bis 125, bevorzugt 80 bis 110°C und ein Druck von 5 bis 70, bevorzugt 20 bis 50 bar herrscht, kontinuierlich eingeführt (vgl.insbesondere EP-A1-0 110 087, US-A-4 427 573, US-A-4 376 191 u.a.).

Die Polymerisation selbst erfolgt mittels eines Übergangsmetallkatalysators in üblichen Mengen. Dieser kann ein Zieglerkatalysator und insbesondere ein Zieglerkatalysator aus einer Titan enthaltenden sowie einer Aluminium enthaltenden Katalysatorkomponente sein. Solche Katalysatorsysteme sind dem Fachmann aus der Literatur und Praxis derartig geläufig, daß sich an dieser Stelle eine nähere Erläuterung erübrigt. Es sei hierzu lediglich auf die Druckschriften EP-A1-0 110 087 und US-A-4 110 523 bzw. 4 113 933 verwiesen. Derartige Katalysatoren und deren Verwendung bei der Polymerisation von Ethylen in der Gasphase sind so bekannt, daß hier nicht mehr auf die Einzelheiten eingegangen werden muß. Die Katalysatoren werden üblicherweise in Mengen von 0,002 bis 0,05 Gew.-%, bezogen auf das Monomer, angewendet. Für die Herstellung von ultrahochmolekularem Polyethylen mit dem angegebenen Korngrößenbereich ist es notwendig, daß der mittlere Durchmesser der Katalysatorpartikel 20 µm nicht übersteigt.

Was für das Katalysatorsystem zu sagen war, gilt sinngemäß auch für gegebenenfalls zusätzlich mit einzusetzenden Molekulargewichtsreglern, wie insbesondere Wasserstoff.

Die Ethylenhomo- oder -copolymerisation soll nach bekannten Verfahren in der Gasphase in einem durchmischten Schüttbett aus kleinteiligem Polymerisat durchgeführt werden. Polymerisation in der Gasphase bedeutet dabei, daß weder ein Lösungs- oder Suspendiermittel für Monomere oder Polymere in der Polymerisationszone vorhanden ist, noch, daß ein überkritisches Ethylen mit flüssigkeitsähnlichen Dichten und Lösungseigenschaften vorliegt. Unter einem durchmischten Schüttbett wird sowohl ein gerührtes Schüttbett als auch ein Wirbelschichtbett verstanden. Das Verfahren in einem gerührten Schüttbett basiert im wesentlichen auf der aus den US-Patenten 3 254 070 und 3 350 376 sowie dem britischen Patent 1 552 438 bekannten Verfahrensart. Ein besonders bevorzugtes Verfahren ist in der EP-A1-0 110 087 beschrieben, bei dem die Polymerisationswärme durch Joule-Thomson-Kühlung abgeführt wird, indem man ein gegenüber dem Polymerisationsdruck komprimiertes und gegenüber der Polymerisationstemperatur kälteres Monomerengemisch in überschüssiger Menge in die Polymerisationszone entspannt, derart, daß dort durch die dabei entstehende Joule-Thomson-Kälte die gewünschte Polymerisationstemperatur aufrechterhalten bleibt und die gasförmige, nicht durch Polymerisation verbrauchte Menge des Monomerengemisches aus der Polymerisationszone abgezogen und nach Komprimierung sowie Kühlung im Kreislauf wieder der Polymerisationszone zugeführt wird. Das Verfahren in einem durchgewirbelten Schüttbett, das sogenanntge Wirbelschichtverfahren, ist ebenfalls so bekannt, daß es hierzu keiner besonderen Erläuterung bedarf (vgl. EP-B1-0 004 966 und EP-A1-0 089 691).

Die Abführung der Polymerisationswärme erfolgt durch Kühlung des Monomerkreisgases. Diese Kühlung kann durch übliche Wärmeaustauscher (vgl. z.B. US-A-4 012 573) oder durch Entspannungskühlung (vgl. EP-A1-0 110 087) erfolgen.

Das Austragen des Polymerisats aus der Polymerisationszone erfolgt üblicherweise durch Entspannungsventile, die periodisch geöffnet werden.

Nach erfindungsgemäßem Verfahren soll in Gegenwart von 0,0002 bis 0,02 Gew.-% (= 2 bis 200 Gew.ppm), bevorzugt 0,0005 bis 0,01Gew.-% (= 5 bis 100 Gew.ppm), bezogen auf die gewonnene und ausgetragene Ethylenpolymerisatmenge, eines Antistatikums polymerisiert werden.

Antistatika sind Zusätze unterschiedlicher Zusammensetzung, welche die elektrostatische Aufladung verhindern. Geeignete Antistatika sind beispielsweise C₁₂- bis C₂₂-Fettsäureseifen von Alkali- oder Erdalkalimetallen, Salze von Sulfonsäureestern mit der allgemeinen Formel (RR')CHOSO₃Me, Ester von Polyethylenglykolen mit Fettsäuren, Polyoxyethylenalkylether ect. Eine Übersicht über Antistatika für Ethylenpolymerisate, die auch für das erfindungsgemäße Verfahren geeignet sind, findet man in den Publikationen von G.Balbach in "Kunststoffe" 67, (1977), Seiten 154 bis 159 und von der Fa Sumitomo Chemical Co. in der EP-A1-0 107 127, Seiten 6 bis 10.

Besonders geeignet als antistatisch wirkende Substanz ist ein Produkt mit dem Handelsnamen KEROSTAT CE 5009®, das aus einer Mischung aus Chromoleoyl-anthranilat, Calcium-medialant und Di-tertiärbutylphenol besteht.

Nach bevorzugten Verfahrensweisen wird die antistatisch wirkende Substanz vor Beginn der Polymerisation dem Schüttbett zugesetzt und kontinuierlich dem Polymerisationssystem während der Polymerisation beigegeben.

Bevorzugt wird das Antistatikum in Lösung, insbesondere in 1 bis 15 gew.%iger Lösung in Paraffinöl bzw. einem Gemisch aus Paraffinöl und n-Heptan zudosiert, wobei das Paraffinöl möglichst rein sein soll. Bei dieser Zugabe wird nach bevorzugter Verfahrensweise unter Stickstoffdurchperlung die Lösung sauerstofffrei gehalten und diese Lösung dem polymerisationssystem zugegeben.

Nach besonders bevorzugter Arbeitsweise wird zur Herstellung der zu dosierenden antistatisch wirkenden Lösung das Antistatikum KEROSTAT CE 5009® in einer Dosiervorlage im Gewichtsverhältnis 1 : 10 in Paraffinöl, z.B. ONDINA 15®, gelöst und zur Mischung unter Sauerstofffreiheit kontinuierlich mit Stickstoff durchströmt. Um die Dosierbarkeit zu verbessern, kann nach Bedarf n-Heptan oder ein anderer niederer Kohlenwasserstoff zugesetzt werden. Die Zugabe dieser Lösung zum Reaktor erfolgt beginnend mit mindestens einer Stunde vor Dosierbeginn des Katalysators. Während dieser Startphase befindet sich die Anlage auf Kreisfahrweise, d.h. der Reaktor steht druck-, temperatur- und konzentrationsseits unter Reaktionsbedingungen und wird von Kreisgas = Reaktionsgas durchströmt.

Nach Katalysatorzugabe und Reaktionsbeginn ist die Dosierrate auf mindestens 10 Gew.ppm Antistatikum, bezogen auf die produzierte Polyethylenmenge, einzustellen. Höhere Konzentrationen können nach Bedarf eingestellt werden.

Die mit der Erfindung erzielten Vorteile sind insbesondere darin zu sehen, daß die Bildung von anhaftenden und/oder abgelösten mehr oder weniger großen Polymerbelägen bzw. Polymerbrocken vermieden wird. Infolge des Wegfalls dieser Produktablagerungen sind die Reaktorbedingungen konstant einstellbar und reproduzierbar, die zu erreichenden Reaktorlaufzeiten liegen deutlich höher und es ist eine gleichmäßig gute Produktqualität des zu produzierenden Ethylenpolymerisats gegeben.

### Beispiel

In einen 1,5 m³-Reaktor, in dem sich zur Durchmischung des Reaktorinhaltes ein mit 80 Umdrehungen/Minute laufender Rührer befindet, wird Ethylen kontinuierlich bei 35 bar Reaktordruck polymerisiert. Die Reaktionstemperatur beträgt 100°C. Sie wird dadurch aufrechterhalten, daß nichtumgesetztes heißes Ethylen aus dem Reaktor abgeführt, abgekühlt, komprimiert und nach Entspannung auf Reaktordruck kalt wieder in die Reaktionszone eingeführt wird. Als Katalysator wird ein üblicher Zieglerkatalysator verwendet, dessen Partikelgröße 20 µm nicht übersteigt. Er wird in einer Menge von 3g/h in den Reaktor dosiert. Als Cokatalysator werden stündlich 6 g Tri-isobutylaluminium zugefahren. Aus dem Reaktor werden stündlich 60 kg ultrahochmolekulares Polyethylen mit einem Molekulargewicht von ca. 6 × 10⁶ ausgetragen und das verbrauchte Kreisgas durch Frischethylen ersetzt.

In den Reaktor werden beginnend zwei Stunden vor der ersten Katalysatorzugabe stündlich 100 ml einer 10 gew.%igen Lösung von Kerostat CE 5009 in einer Mischung aus gleichen Gewichtsteilen Paraffinöl und n-Heptan dosiert.

Die Reaktionstemperatur im Reaktor läßt sich auf diese Weise sehr konstant auf 100°C ± 0,2°C einstellen. Demzufolge zeigen auch die Polymereigenschaften geringe Schwankungen. Die Viskositätszahl [η] liegt bei 24 ± 1 dl/g und die Polymerendichte bei 0,931 ± 0,002 g/cm³. Bei der Reaktion werden keine den Reaktorlauf störenden Polymerbrocken gebildet.

### Vergleichsbeispiel

Es wird verfahren wie in Beispiel 1, nur wird weder vor noch während der Polymerisation Antistatikum dosiert. Die angestrebte Reaktionstemperatur von 100°C weist in diesem Fall größere Schwankungen von bis zu ± 3°C auf. Aus dem Reaktor werden in zunehmendem Umfang zusammengesinterte Polymerbröckchen ausgetragen.

Die Viskositätszahl des Polymerisates schwankt zwischen 22 und 32 dl/g, die Dichte zwischen 0,927 und 0,940 g/cm³.

Nach einer Laufzeit von 2 Tagen mußte der Reaktor wegen zu vieler Brocken im Reaktor und der damit verbundenen Gefahr der Schädigung des Rührers abgestellt werden.

## Patentansprüche

1. Verfahren zur Herstellung von ultrahochmolekularen Ethylenpolymerisaten mit einem Molekulargewicht von über 2·10⁶ durch Homopolymerisation von Ethylen oder Copolymerisation von Ethylen mit Ethylen copolymerisierbaren Verbindungen durch kontinuierliches Einführen der Monomeren in ein Polymerisationssystem, in dem eine Temperatur zwischen 60 und 125°C und ein Druck zwischen 5 und 70 bar herrscht, wobei man die Polymerisation in Anwesenheit eines Katalysators und gegebenenfalls eines Molekulargewichtsreglers in der Gasphase in einem durchmischten Schüttgutbett aus kleinteiligem Polymerisat mit einer mittleren Teilchengröße von gleich oder kleiner als 1 mm unter Abfuhr der Polymerisationswärme durch Kühlung des Ethylenkreisgases ausführt, und Austragen des Polymerisats aus dem Polymerisationssystem dadurch gekennzeichnet, daß in Gegenwart von 0,0002 bis 0,02 Gew.-%, bezogen auf die Ethylenpolymerisatmenge, eines Antistatikums polymerisiert wird, wobei das Antistatikum kontinuierlich dem Polymerisationssystem während der Polymerisation zugesetzt wird.

2. Verfahren nach Anspruch 1, dadurch gekennzeichnet, daß in Gegenwart von 0,0005 bis 0,1 Gew.-% Antistatikum polymerisiert wird.

3. Verfahren nach Anspruch 1, dadurch gekennzeichnet, daß das Antistatikum vor Beginn der Polymerisation dem Schüttgutbett zugesetzt wird.

4. Verfahren nach Anspruch 1, dadurch gekennzeichnet, daß das Antistatikum in Form einer Lösung zugegeben wird.

5. Verfahren nach Anspruch 1, dadurch gekennzeichnet, daß das Antistatikum in Form einer 1 bis 15 gew.%igen Lösung in Paraffinöl zugegeben wird.

6. Verfahren nach Anspruch 1, dadurch gekennzeichnet, daß das Antistatikum in Form einer 1 bis 15 gew.%igen Lösung in einem Gemisch aus gleichen Teilen Paraffinöl und n-Heptan zugegeben wird.

## Claims

1. A process for preparing ultrahigh molecular weight ethylene polymers having a molecular weight of more than 2×10⁶ by homopolymerizing ethylene or copolymerizing ethylene with compounds which are copolymerizable with ethylene, by continuously introducing the monomers into a polymerization system which is at a temperature of from 60 to 125°C and under pressure of from 5 to 70 bar, the polymerization being carried out in the presence of a catalyst and in the presence or absence of a molecular weight regulant in the gas phase in a thoroughly mixed dumped material bed of particulate polymer having an average particle size of equal to or less than 1 mm while the heat of polymerization is removed by cooling the circulating ethylene gas, and discharging the polymer from the polymerization system, which comprises polymerizing in the presence of from 0.0002 to 0.02% by weight, based on the amount of ethylene polymer, of an antistat, the antistat being added to the polimerization system continuously during the polimerization.

2. A process as claimed in claim 1, wherein from 0.0005 to 0.01% by weight of antistat is present in the polymerization.

3. A process as claimed in claim 1, wherein the antistat is added to the dumped material bed before the start of the polymerization.

4. A process as claimed in claim 1, wherein the antistat is added in the form of a solution.

5. A process as claimed in claim 1, wherein the antistat is added in the form of a 1-15% strength by weight solution in paraffin oil.

6. A process as claimed in claim 1, wherein the antistat is added in the form of a 1-15% strength by weight solution in a mixture of equal parts of paraffin oil and n-heptane.

## Revendications

1. Procédé de préparation de polyméres de l'éthylène de poids moléculaire extrêmement élevé, possédant un poids moléculaire supérieur à 2.10⁶, par l'homopolymérisation de l'éthylène ou de copolymères de l'éthylène avec des composés copolymérisables avec l'éthylène par l'introduction continue des monoméres dans un système de polymérisation où règne une température qui varie de 60 à 125°C et une pression qui fluctue de 5 à 70 bars, conformément auquel on réalise la polymérisation en présence d'un catalyseur et éventuellement d'un régulateur du poids moléculaire en phase gazeuse, dans un lit lâche de polymère en fines particules, agité, possédant un calibre moyen des particules égal à ou plus petit que 1 mm, avec évacuation de la chaleur de polymérisation par refroidissement du gaz éthylène recyclé et prélèvement du polymère du système de polymérisation, caractérisé en ce que l'on opère la polymérisation en présence de 0,0002 à 0,02% en poids, par rapport à la proportion de polymère d'éthylène, d'un agent antistatique, l'agent antistatique étant ajouté en continu au système de polymérisation au cours de la polymérisation.

2. Procédé suivant la revendication 1, caractérisé en ce que l'on opère la polymérisation en présence de 0,0005 à 0,01% en poids de l'agent antistatique.

3. Procédé suivant la revendication 1, caractérisé en ce que l'on ajoute l'agent antistatique au lit lâche avant la polymérisation.

4. Procédé suivant la revendication 1, caractérisé en ce que l'on ajoute l'agent antistatique sous la forme d'une solution.

5. Procédé suivant la revendication 1, caractérisé en ce que l'on ajoute l'agent antistatique sous la forme d'une solution à 1 à 15% en poids dans de l'huile de paraffine.

6. Procédé suivant la revendication 1, caractérrisé en ce que l'on ajoute l'agent antistatique sous la forme d'une solution à 1 à 15% en poids dans un mélange constitué de parties égales d'huile de paraffine et de n-heptane.
